# EUROPEAN PATENT APPLICATION

(11) **EP 2 036 471 A1**
(43) Date of publication of application: **18.03.2009**
(21) Application number: 08164434.6
(22) Date of filing: 16.09.2008
(51) Int. Cl.: A47J 31/44

(54) **Device for preparing froth for a cappuccino**

(30) Priority: 17.09.2007 IT MI20071793
(71) Applicant: Tenacta Group S.p.A., 24052 Azzano S. Paolo (BG) (IT)
(72) Inventor: Morgandi, Arturo, 24129 Bergamo (IT)
(74) Representative: Faraggiana, Vittorio

(57) **Abstract**

A device for preparing froth for a cappuccino comprises means (14) suitable for generating steam suitable for forming cappuccino froth and means for delivering (15, 16) steam supplied by the generating means in a milk container. The device comprises a seat (13) intended for receiving in use the milk container (37) with preset positioning, said means for delivering (15, 16) being movable between an operating position for delivering steam to the container when received in the seat (13) and a non-operating position retracted from the container.

## Description

The present invention relates to an innovative device for preparing froth for a cappuccino.

In the prior art devices are known that are suitable for forming milk froth for cappuccinos, which are for example used in restaurants or bars. Normally, such devices comprise an emulsifying steam generator and a dispensing nozzle that receives the steam from the generator and is immersed in the milk to be treated to form the froth in an appropriate container.

This known device nevertheless requires a certain skill in the preparation of the froth by the user, who is in fact left the task of choosing how long to treat the milk with the jet of steam and the reciprocal position between the nozzle and milk container, which are important factors for obtaining satisfactory froth production.

If the user of the device is not sufficiently expert, the quality and the quantity of froth produced may be inappropriate for preparing the cappuccino.

In order to prevent the result of the treatment depending on the skill of the operator, frothing devices have been proposed that are provided with a system of automatic control of dispensing of the emulsifying steam.

In particular, patent EP 1 501 398 discloses a frothing device provided with a controller that commands the interruption of the flow of emulsifying steam in function of the temperature reached by the milk in the container. It is in fact known that the quality and quantity of froth produced is linked to the temperature level reached by the milk under the effect of the flow of steam. In order to provide the controller with the datum relating to the temperature of the milk, the device provides a temperature sensor arranged at the steam dispensing nozzle to be immersed in the milk.

This known device is, however, difficult to maintain clean inasmuch as a component of the machine (namely the nozzle provided with a sensor) is regularly immersed in the milk and becomes dirty at each work cycle.

The milk residues in the nozzle may also entail hygiene problems due to the development of undesired microorganisms. Further, the mutual positioning between the nozzle and the container is still entrusted to the discretion and skill of the user.

The general object of the present invention is to remedy the aforesaid drawbacks by providing a device for preparing froth for a cappuccino that is able to produce the froth in an automatic and repeatable manner without requiring particular skills on the part of the user.

A further object of the invention is to provide a device for preparing froth for a cappuccino that enables a high level of hygiene to be maintained without requiring difficult and continual cleaning of the machine.

In view of this object, it has been decided to devise, according to the invention, a device for preparing froth for a cappuccino comprising generating means for generating steam that is suitable for forming cappuccino froth and means for delivering steam supplied by generating means in a milk container, characterised in that it comprises a seat intended for receiving in use the milk container with preset positioning, said means for delivering being movable between an operating position for delivering steam to the container when received in the seat and a non-operating position retracted from the container.

In order to make the explanation of the innovative principles of the present invention and the advantages thereof over the prior art clearer, with the help of the attached drawings a possible embodiment applying such principles will be disclosed below. In the drawings:
- figure 1 is a section view of a device according to the invention in a non-operating condition, before the milk container is inserted;
- figure 2 is a view that is similar to the preceding view where the milk container has been inserted into the device, but preparation of the froth has not yet commenced;
- figure 3 is a section view that is similar to the preceding views in the operating condition for preparing the cappuccino froth;
- figure 4 is an enlarged view showing the end body of the supply conduit supplying steam to the milk container;
- figure 5 is an enlarged section view showing the temperature sensor of the device;
- figure 6 is a perspective view of the device with the front closing door of the gap receiving the milk container removed.

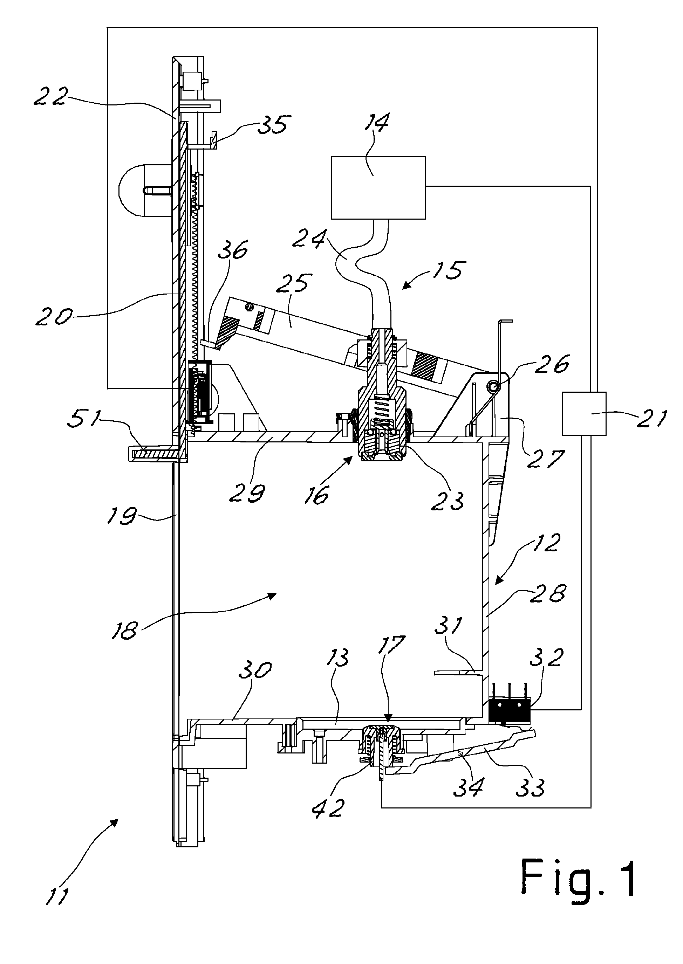

With reference to the figures, in figure 1 there is shown a device 11 for preparing cappuccino froth.

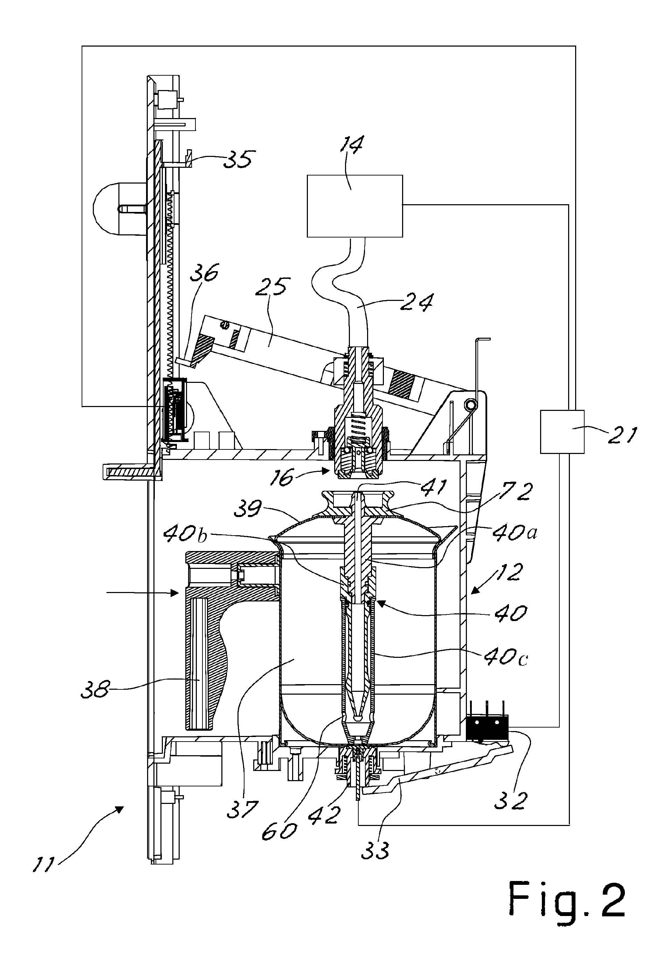

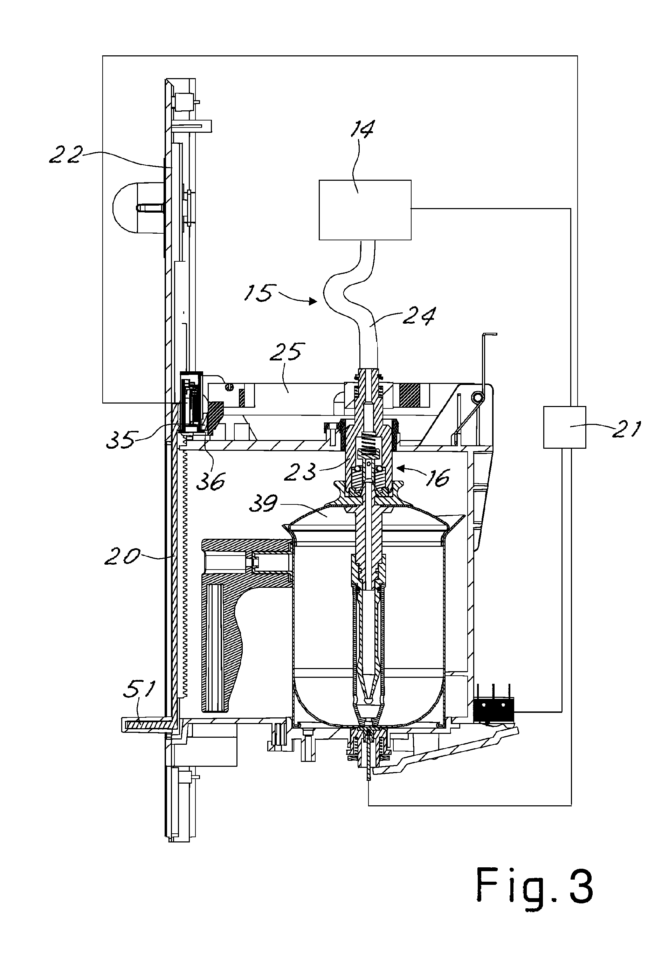

The device 11 comprises a frame 12 that forms a gap 18 defined by an upper wall 29, a lower wall 30 and a side wall 28. The gap 18 is intended for receiving the milk container 37 (see figures 2 and 3) and is provided within with a seat 13 for receiving the container. The gap has an opening 19 through which the milk container can be inserted into the seat.

The seat 13 is formed by an almost cylindrical cavity formed on the lower wall 30 of the gap 18; advantageously, a protruding wall 31 of the side wall 28 of the gap can form a lateral rest of the container 37, to ensure correct positioning during operation of the device.

The device comprises steam-generating means 14 suitable for forming cappuccino froth. The generator 14 supplies the steam to a supply conduit 15 having an end 16 that is movable between a non-operating position retracted from the container 37 (figures 1 and 2) and an operating position for delivering steam into the container 37 (figure 3).

The generator 14 is shown only schematically and can be made according to any *per* se technique known in the field so as to make a pressurised steam and air mixture.

The conduit 15 comprises a first flexible portion 24, connected upstream of the generator 14, and a stiff end body 23 that forms the end 16 of the conduit that is movable between the operating position and the non-operating position.

The device 11 also comprises a temperature sensor 17 for detecting the temperature of the milk arranged at the seat 13 receiving the container 37. The sensor 17 is connected to controlling means 21 of the device, which controlling means 21 produces an "end of cycle" signal when the sensor detects a preset temperature. The "end-of-cycle" signal can be used to command a direct interruption of the supply of steam or simply to generate a warning signal for the user of the machine, which can thus interrupt the operation of the device and extract the container with the froth ready. In this manner it is not necessary for the user to have particular skill in preparing the cappuccino froth, inasmuch as the dispensing of steam is interrupted when an optimal preset temperature is reached for the milk under the action of the flow of steam.

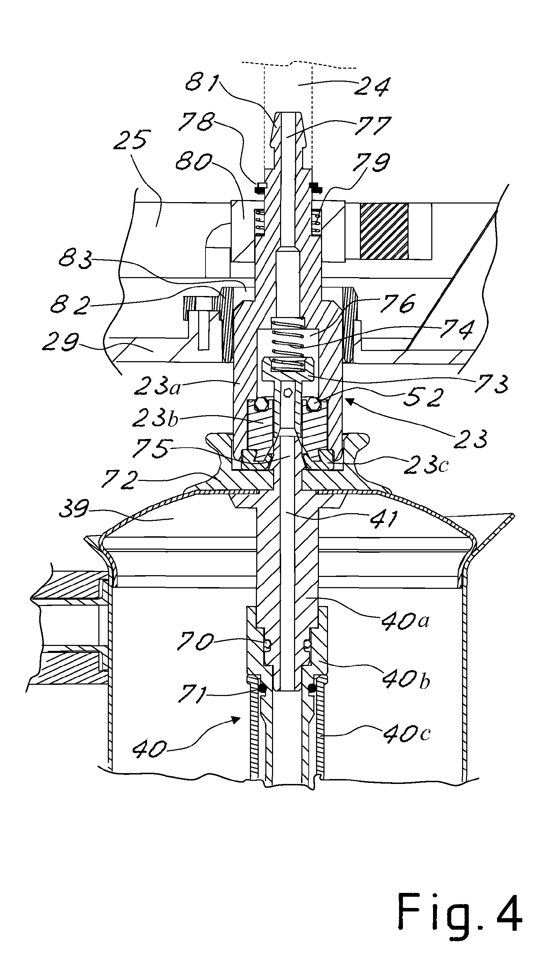

The end body 23 is slidable in a hole 83 obtained in the upper wall 29 of the gap (see figure 4) and is moved from the non-operating position to the operating position by means of a lever 25 to which it is connected above.

The lever 25 is hinged with horizontal-axis pivoting 26 to the flanges 27 protruding from the walls that form the gap 18 and can be advantageously pushed by a rising spring.

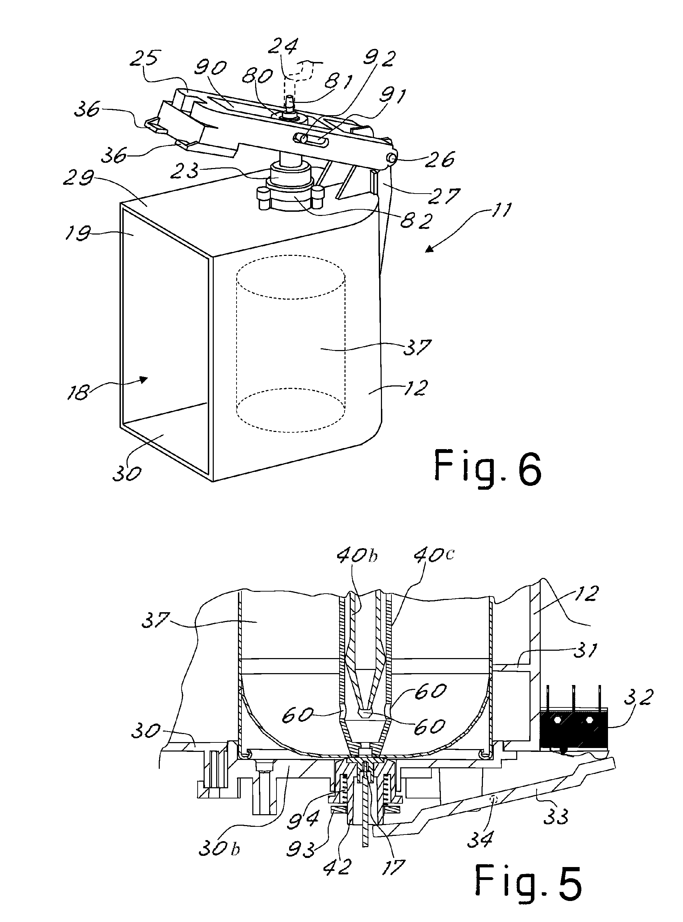

The device 11 is provided with a door 20 for closing the gap 18, mounted slidably on the frame along guides 22. When the door is lowered to close the gap, the protrusion 35 of the door engages the lever 25 (in particular the teeth 36, see figure 6) and the door in the lowered position shown in figures 2 and 3. With the lever lowered, the end body 23 is taken to the operating position to deliver steam to the container.

The door 20 can be advantageously handled manually by the operator at the protruding gripping portion 51 (indicated in figure 1).

The temperature sensor 17 is mounted on a movable support 42 pushed by a spring upwards, as clearly shown in the enlargement of figure 5. When the container 37 is received in the seat 13, the spring 94 is compressed and the support 42 moves downwards. The sensor 17 thus remains pressed in thermal contact against the external wall of the container 37, in particular the bottom wall, adhering in a secure manner to the container to provide a reliable indication of the temperature of the milk in the interior thereof.

The stroke of the support 42 interferes with the lever 33, pivoted on the frame with pivoting 34 and positioned so as to act on a switch 32 connected to the controlling means 21. This arrangement enables the correct positioning of the container 37 to be detected in the seat 13. The controller 21 can use this information to prevent the dispensing of the steam by the generator 14 in the event of incorrect positioning of the container in the gap.

The device can also be provided with a sensor for detecting the closure of the door 20 and the consequent positioning in the operating configuration of the body 23 for the delivery of the steam into the container 37.

The end 16 of the conduit 15 in the operating position does not extend in the part of the container intended for receiving the milk, and does not therefore come into contact with the milk.

The end 16, and in particular the end body 23, as well shown in figures 3 and 4, delivers the pressurised steam to an internal conduit 40 of the container 37. The internal conduit 40 is in use immersed in the milk and takes the steam from the end 16 of the conduit 15 to the milk in the container so as to form the cappuccino froth.

Advantageously, the conduit 40 is formed integral with a cover 39 of the container. The conduit 40 is advantageously formed of three pieces 40a, 40b, 40c sealingly connected together and shown better in figures 4 and 5. The cover 39 is provided with a hole 41 through which the steam is delivered into the conduit 40, which extends to the interior of the container from said hole 41 in the cover.

The container can be easily delivered into the gap 18 using the handle 38 indicated in the figure 2.

With reference to figure 4 there is disclosed in greater detail the end body 23 of the supply conduit 15 supplying steam, which is formed with an outer part 23a and an inner collar 23b that bears the washer 52.

Advantageously, the interior of the body 23 is provided with a valve to prevent the exiting of emulsifying steam in the absence of engagement with the container 37.

In particular, the body 23 forms a chamber 76 inside which there is arranged a shutter 73 pushed downwards by the spring 74. In the absence of engagement with the container 37, the shutter 73 is pushed against the washer 52 mounted on the inner collar 23b and prevents the pressurised steam exiting.

When the body 23 is taken to the operating position engaged with the cover 39, the shutter 73 is taken to the raised position shown in the figure 4 and the steam can flow to the shank 75 of the body 40a, which in fact pushes the shutter against the action of the spring to open the valve. In the position in figure 4, the lip washer 23c of the body 23 forms a seal with the collar 72 of the cover 39 to ensure that the steam flows into the container through the hole 41 without leaks.

The body 23 is slidable vertically in the hole formed by a bush 82 screwed to the wall 29 of the gap 18 and is pushed downwards by the spring 79 that acts between the upper shoulder of the bush 80 and a shoulder of the body 23a.

The bush 80, when in rest mode with the lever 25 raised, abuts on the stopping ring 78 mounted on the body 23a, whilst it detaches from the latter when the body 23 is pressed against the cover 39 of the container when in operating mode.

The bush 80, as shown in figure 6, is received in the central cavity 90 formed in the lever 25 and has a pair of pivots 92 on opposite sides (in the figure there is shown only one thereof) received in longitudinal slots 91 in the lever 25.

When the lever 25 is lowered the pivots 92 slide along the slots 91, the bush 80 is lowered and pushes by spring-action the body 23 against the cover 39 in such a manner as to achieve a secure seal by means of the washer 23c.

With reference to figure 6, there is also shown the lower part of the conduit 40. In particular, there are shown the openings 60 on the side wall of the external pipe 40c, supplied by the internal pipe 40b of the conduit open below. The pipe 40c may have an axial opening also at the lower ends thereof.

The mutual positioning between the dispensing conduit 40 for dispensing the steam into the milk and the container 37 is thus preset and independent of the user. This enables optimum production of froth to be achieved without particular skill being required of the user.

As can be seen from figure 5, the wall part 30b that forms the seat 13 for the container can be formed in a separate piece screwed to the wall 30 that forms the bottom of the gap 18.

Still with reference to figure 5, it can be seen how the support 42 of the temperature sensor 17 forms an annular cavity that houses the spring 94, acting between the fixed element 93 and the support 42 to push the sensor against the bottom of the container.

An operating cycle of the above device is now disclosed briefly.

Initially, the door 20 is in the raised position, with the gap 18 open, the end 16 of the supply conduit in the non-operating position and the support 42 of the sensor in the raised position (figure 1).

The user can thus position the container 37 filled with milk in the gap 18, positioning the container 37 at the seat 13. The sensor 17 is pressed downwards by the weight of the container and the switch 32 is actuated to indicate the correct positioning of the container in the seat (figure 2).

The operator can thus lower the slidable door 20 to close the gap 18. The lever 25 engages with the door 20 and is taken to the lowered position, dragging the bush 80 and the stiff body 23 that goes to the operating position engaging with the cover 39 of the container (figure 3).

Dispensing pressurised steam into the milk thus begins, which can be actuated by the operator pressing the pushbutton or also automatically by the door 20 closing.

Whilst the steam flows into the conduit 40 and causes the froth to form, the temperature of the milk increases until a preset level is reached that is considered to be optimal for preparing the froth. The controller 21 perceives the reaching of the temperature threshold by the sensor 17 and commands the interruption of the dispensing of the pressurised steam, possibly emitting a sound signal or signal of another type to alert the operator to the end of milk treatment.

The operator can then lift the door 20 and free the container 37 from engagement with the supply conduit 15 and extract the container with the froth inside without any fixed part of the device coming into contact with the milk.

The door can be provided with locking means in the closing position so as to ensure correct positioning of the components of the device during formation of the froth.

It remains understood that the controlling means 21 can be made by any known technique that is easily imaginable by those skilled in the art and that the controlling means 21 can control directly the steam generating means 14 to command dispensing of the steam.

It is thus clear at this point how the objects of the present invention have been reached. In particular, a device has been provided that enables froth for cappuccinos to be prepared in a safe manner and without requiring any particular skill on the part of the user of the device. In fact, owing to the presence of the temperature sensor, the process is stopped at the optimal moment for having the desired froth. Further, mutual positioning of the steam-dispensing pipe and of the container is always the same, the conduit 40 being integral with the cover of the container, and therefore with the container.

Further, the device is very easy to clean and enables a high level of hygiene to be obtained easily. In fact, only the container and the cover of the container come into contact with the milk, and not the supply conduit supplying the emulsifying steam or other non-removable parts of the machine, which do not therefore require cyclical and difficult cleaning. It will be sufficient to wash the cover and the container to obtain the desired level of hygiene.

The machine also enables a high level of safety to be obtained owing to the valve at the end 16 of the supply conduit supplying steam that prevents steam being dispensed in the absence of the container, minimising the possibility of the user getting burnt.

Naturally, the above description of an embodiment applying the innovative principles of the present invention is given only by way of example of such innovative principles and must not be taken to limit the protective scope of what is claimed herein.

## Claims

1. Device for preparing froth for a cappuccino comprising means (14) for generating steam suitable for forming cappuccino froth and means for delivering (15, 16) steam supplied by generating means to a milk container, **characterised in that** it comprises a seat (13) intended for receiving in use the milk container (37) with preset positioning, said means for delivering (15, 16) being movable between an operating position for delivering steam to the container when received in the seat (13) and a non-operating position retracted from the container.

2. Device according to claim 1, **characterised in that** said delivering means comprises a supply conduit (15) connected to the generating means for receiving steam, the conduit (15) having an end (16) that is movable between an operating position for supplying steam to the container (37) received in the seat (13) and a non-operating position retracted from the container (37).

3. Device according to claim 1, **characterised in that** it comprises a temperature sensor (17) for detecting the temperature of the milk in the container (37).

4. Device according to claim 3, **characterised in that** the temperature sensor (17) is arranged at the seat (13) for receiving the milk container (37) to make a thermal contact with an external wall of the container.

5. Device according to claim 3, **characterised in that** it comprises controlling means (21) connected to said sensor (17) to generate an "end of cycle" signal when the sensor detects a preset temperature.

6. Device according to claim 5, **characterised in that** the end-of-cycle signal commands the interruption to the dispensing of emulsifying steam.

7. Device according to claim 1, **characterised in that** in the operating position the steam delivering means (15, 16) does not extend to the part of the container intended for receiving the milk and is configured for delivering the steam to an internal conduit (40) of the container intended to conduct the steam from the delivering means (15, 16) to the milk in the container (37).

8. Device according to claim 7, **characterised in that** the container (37) is provided with a cover (39) provided with a hole (41) for receiving the steam from the delivering means (15, 16), the internal conduit (40) protruding from said hole to take the steam to the milk in the container (37).

9. Device according to claims 2 and 8, **characterised in that** the movable end (16) of the conduit is made with a stiff end body (23) that is sealingly connectable to the hole (41) on the cover (39).

10. Device according to claim 2, **characterised in that** the movable end (16) of the supply conduit (15) is provided with a valve suitable for preventing the supply of steam, said valve being opened to enable the supply of steam when the movable end (16) of the supply conduit (15) is taken to the operating position in a condition of engaging with the container (37).

11. Device according to claim 1, **characterised in that** it comprises a gap (18) inside which there is formed the receiving seat (13) for receiving the container, said gap being closable with a door (20).

12. Device according to claim 11, **characterised in that** the steam delivering means (15, 16) is connected kinematically to the door (20) so as to be in the operating position with the door (20) closed and in the non-operating position with the door open.

13. Device according to claims 9 and 12, **characterised in that** the stiff end body (23) is connected to a lever (25) hinged on the frame (12) with horizontal pivoting (26) to be moved between the operating position and the non-operating position, said lever (25) being lowered to take the stiff end body to the operating position through the action of the closing door (20) during movement thereof to the closing position.

14. Device according to claim 1, **characterised in that** it comprises detecting means for detecting the positioning of the container (37) of the respective seat (13).

15. Device according to claim 14, **characterised in that** said detecting means comprises a switch (32) connected kinematically to a movable element (42) pushed by a spring against the bottom of the receptacle, said element (42) bearing the temperature sensor (17).

16. Device according to claim 4, **characterised in that** the temperature sensor (17) is pushed by a spring against an external wall of the container (37) when the latter is received in said seat (13).
